(19) Europäisches Patentamt
European Patent Office
Office européen des brevets

(11) Publication number: 0 377 184 A2

(12) **EUROPEAN PATENT APPLICATION**

(21) Application number: 89123798.4

(51) Int. Cl.[5]: C04B 14/20, D21H 13/44

(22) Date of filing: 22.12.89

(30) Priority: 27.12.88 US 290592

(43) Date of publication of application: 11.07.90 Bulletin 90/28

(84) Designated Contracting States: BE DE FR GB IT NL

(71) Applicant: HERCULES INCORPORATED
Hercules Plaza
Wilmington Delaware 19894(US)

(72) Inventor: Conner, Herbert Thompson
19 Glennann Drive
Landenberg Pennsylvania 19350(US)

(74) Representative: Lederer, Franz, Dr. et al
Van der Werth, Lederer & Riederer
Patentanwälte Lucile-Grahn-Strasse 22
D-8000 München 80(DE)

(54) **Water resistant mineral products.**

(57) A mass of vermiculite lamellae, characterized in that it incorporates from about 0.2 to about 10% by weight of an internal sizing agent based on the dry weight of the vermiculite, in the form of about 0.1 to about 50% by weight of vermiculite lamellae dispersed in water or a shaped article substantially lacking in water, and a process for making the mass of vermiculite lamellae, are disclosed.

EP 0 377 184 A2

## WATER RESISTANT MINERAL PRODUCTS

This invention relates to methods for providing water-resistance to shaped vermiculite articles fabricated from vermiculite lamellae obtained by the delamination of vermiculite ore.

The term "vermiculite" refers not only to materials known mineralogically or commercially as vermiculite, but also to minerals consisting largely of vermiculite including minerals of a mixed-layer type (phyllosilcates) containing vermiculite layers as a constituent such as hydrobiotites and chlorite-vermiculites, and other layered silicate minerals that can be delaminated in the same or similar manner as vermiculite, including montmorillonite, kaolinite and clays comprising sepiolite, and kaolinite.

Vermiculite lamellae or platelets have a particle size typically less than about 200 microns, preferably less than about 50 microns, and have one dimension that is small compared to the other two dimensions, with an aspect ratio (i.e., length or breadth divided by thickness) of at least 10.

Masses of vermiculite lamellae that can be used as shaped articles or products such as paper, sheets or composites with other fibrous material are obtained in the form of aqueous dispersions by delaminating vermiculite ore (and other layered silicate minerals), using various well known methods, including for instance chemical means or the application of heat to expand the particle structure, followed by mechanically shearing. They can be used to form rigid foams by gasifying the dispersions prior to removal of water. (See, for example, U.S. Patents 4,608,303, 4,472,478, 4,271,228, and 4,269,628, and European Patent Application 881108062, which discloses mechanical delamination by shearing a dispersion of the vermiculite ore itself to produce a mass of lamellaein water-dispersion having dimensions less than 200 microns).

Masses of vermiculite lamellae from which the water has been removed are articles having high resistance to heat that are particularly suited for use as electrical and thermal insulation materials, fireproof packaging materials and refractory-facing materials.

However, the usefulness of such articles has been limited in applications where there is contact with aqueous media, because such vermiculite articles tend to absorb and hold water, which not only detracts from their electrical insulating qualities, but tends to weaken them physically and even cause disintegration during prolonged exposure.

Various methods have been proposed to impart resistance to vermiculite products to maintain their structural integrity in aqueous media, including, for example, postformation treatment of vermiculite articles with aqueous solutions of electrolytes, as disclosed in British Patent Specification No. 1,016,385 or with ammonia vapor or the vapor of an amine as disclosed in U.S. Patent 4,219,609. and also including the treatment of dispersions of vermiculite lamellae used to form such products with solutions of inorganic ions, as disclosed in U.S. Patent 4,269,628 or the incorporation of a urea-formaldehyde or melamine-formaldehyde resin into a dispersion of vermiculite lamellae, as disclosed in U.S. Patent 4,485,203.

Such methods, however, merely help to maintain the structural integrity of articles composed of vermiculite in aqueous media, but do not decrease or prevent the surface wetting that leads to penetration and absorption of water. Indeed, several of the aforementioned methods actually increase water absorption by making the surface of vermiculite-containing articles hydrophilic. There is therefore a need for shaped vermiculite articles having improved resistance to surface wetting in aqueous media and processes for making them, while avoiding the disadvantages of known processes and compositions, including the need for extra processing steps.

According to the invention, a mass of vermiculite lamellae is characterized in that it incorporates from about 0.2 to about 10% by weight of at least one internal sizing agent based on the dry weight of the vermiculite.

Also included in the invention is a process for making the mass of vermiculite lamellae according to the invention in which from about 0.1 to about 50% by weight of dry vermiculite is dispersed in water and the water is removed from the dispersion after a shaping step to form a shaped article, characterized in that from about 0.2 to about 10% of the dry weight of the vermiculite of an internal sizing agent is incorporated into the dispersion of vermiculite lamellae before the water is removed, the internal sizing agent being capable of developing a contact angle that is greater than about 80° between the surface of the shaped article and an impinging aqueous-based liquid.

The term "aqueous-based liquid" means water and solutions containing more than 50% by weight of water such as inks, latexes, salt solutions, acids, and bases.

Dispersions of vermiculite lamellae that comprise the initial masses of vermiculite lamellae according to the invention prior to the removal of water may be formed by any known method, including particularly any of the above-mentioned methods. For example, vermiculite ore can be heated to temperatures in excess of 1000°F to exfoliate or expand vermiculite ore particles followed by dispersing the particles in water and

then mechanically shearing said particles to the desired size, as described, for example, in the above-mentioned U.S. Patent 4,271,228.

Preferably, from about 0.5 to about 5% of the internal sizing agent is incorporated into the dispersion. The sizing agent is adsorbed or absorbed by the tiny particles of vermiculite lamellae therein coating the particles either upon the entire surface or on one or more spots of the respective particles. The coatings on the vermiculite particles are stable and adherent to the particles and remain on the particles in the aqueous dispersion, and during the formation of shaped articles. The amount of sizing compound employed within the indicated range will vary as desired depending upon such variables as the degree of water-repellency and nonwetting (the size of the contact angle formed) of the resulting vermiculite mineral surface desired and the pH of the dispersion.

Following removal of the water, the mass of vermiculite lamellae according to the invention comprises a shaped vermiculite article containing more than about 80% by weight of vermiculite having improved resistance to surface wetting in aqueous-based media with correspondingly decreased water penetration and absorption.

Sizing is a process most readily identified with use of chemical additives in paper manufacturing to confer resistance to wetting, penetration and absorption by aqueous-based liquids such as ink and milk on paper and paper products such as paper-board. Similarly, the sizing agents used in this invention impart a desired degree of water repellency with attendant resistance to wetting, penetration and absorption of aqueous-based liquids to the surface of shaped vermiculite articles.

When an aqueous-based liquid contacts the surface of an unsized vermiculite article, it first wets the surface of the article and its tendency to spread out laterally along the surface is likely to be accelerated by capillary action induced by closely parallel deposited vermiculite particles or platelets lying in the surface. The liquid can also move transversely by being drawn into the vermiculite structure by the capillary action of pores or spaces between the vermiculite platelets.

The effectiveness of an internal sizing agent depends on its ability to provide a surface with a relatively low surface energy hydrophobic coating such that an impinging high energy aqueous-based liquid will form a high contact angle with the surface and thus be discouraged from moving extensively on and penetrating the sized surface.

Unexpectedly, internal sizing agents commonly used in making paper have the same effect on vermiculite surfaces. Thus the extent to which that liquid movement can occur in accordance with this invention can be demonstrated by the contact angle formed between an impinging aqueous-based liquid and the mineral surface of the vermiculite article. For example, an initial contact angle of from about 90 to about 170° is indicative of a well-sized, and water-repellent article. Such a well sized article permits only limited wetting and spreading of the aqueous-based liquid and no tendency to penetrate through pores or engage in other liquid movement. However, if the contact angle is much less than about 90°, for example, 80° or less, extensive wetting and penetration is likely to result.

Examples of such internal sizing agents are the rosin-based size emulsions and dispersions, paraffin and microcrystalline wax emulsions, aliphatic ketene dimers, and alkenyl succinic anhydrides. The most preferred internal sizing agents are the aliphatic ketene dimers, alkenyl succinic anhydrides, and rosin-based size emulsions and dispersions.

Rosin-based sizing compounds that are preferred include alkali metal salts of gum, wood or tall oil rosin (saponified rosin size) or modified rosins (fortified rosin size), such as maleic anhydride or fumaric acid-modified rosins, commercially available, for example, from Hercules Incorporated under its Pexol® trade mark, and high free-rosin size emulsions (dispersed rosin size) available, for example, from Hercules Incorporated under its Neuphor® trade mark.

The major constituent (approximately 90%) of rosin-based sizing compounds, which are amphoteric materials, is a group of polycyclic organic acids, called resin acids. They contain bulky, hydrophobic organic and carboxyl groups that can serve at least two functions in sizing of vermiculite mineral surfaces in accordance with this invention. First, the carboxyl groups can form a salt with an alkali metal to convert the rosin to a water dispersible form, which can then be converted to an aluminum salt on reaction with a soluble aluminum salt, for example, aluminum sulfate or "alum", to form a positively charged aluminum resinate in the form of cationic colloidal particles.

The use of a soluble aluminum salt, such as aluminum sulfate, aluminum chloride and sodium aluminate, which can react with water to produce a mixture of aluminum ions and aluminum hydrates, is in accordance with conventional rosin-based sizing practice. Commercially available aluminum sulfate known as "alum", is preferred in this invention, and preferably in an amount ranging from about 0.2 to about 10% by weight, more preferably from about 0.5 to about 2% by weight, based on the dry weight of vermiculite. In dilute emulsion form, rosin-based sizing compounds consist of a mixture of alkali metal resinate

molecules, such as sodium resinate, and emulsified rosin particles that can react with alum to produce the positively charged rosin-alum colloidal precipitate.

The colloidal particles are attracted, absorbed or adsorbed, and retained by electrostatic forces on the negatively charged vermiculite mineral surface which typically contains a multiplicity of hydroxyl groups. The insoluble cationic aluminum resinate precipitate that is retained on the anionic vermiculite mineral surface can then reorient on the vermiculite surface during drying to provide a low energy hydrophobically modified vermiculite mineral surface. Although it may be desirable to produce such aluminum resinates by reacting rosin-based compounds with alum, it should be understood that rosin-based compounds can be used without reacting with alum.

For rosin-based sizing in accordance with this invention, a dilute emulsion of saponified, fortified, or dispersed rosin-based size is added to a dispersion of vermiculite lamellae. The dilute size may be added batch-wise or continuously over a period of time. The soluble aluminum salt, preferably alum, is usually added after the size to provide a final pH of about 3 to about 8. Depending upon the conditions, however, such as water hardness, alkalinity or the presence of interfering ions, it may be beneficial to first add the alum to the dispersion of vermiculite lamellae before addition of the rosin size to ensure that said rosin size reacts with the aluminum salt to form the aluminum-resinate precipitate rather than reacting with other interfering ions. The order of addition, however, is not critical to this invention.

When dispersions of vermiculite lamellae, in accordance with this invention, are used to make paper or paper products it may be desirable to first add the rosin-based sizing com pound to a paper-making type of a flocculated slurry comprising vermiculite lamellae, and then to add the alum. In any event, the rosin-based size and alum should be added sufficiently early to provide uniform distribution in the vermiculite lamellae mass and adequate time for the cationic aluminum resinate precipitate to form and be retained by the anionic vermiculite mineral surfaces. As indicated it may be desirable in certain cases to use the rosin-based sizing compound alone.

For wax-based sizing in accordance with this invention, paraffin and microcrystalline wax emulsions, which are highly hydrophobic in nature, are added to the mass of vermiculite lamellae either batch-wise or continuously over a period of time. A specific example of a suitable paraffin wax emulsion is, for example, an acid-stable paraffin wax emulsion commercially available from Hercules Incorporated under its Paracol® trade mark.

Such emulsions are cationic in nature and can be retained on the vermiculite mineral surface by electrostatic attraction or by the use of cationic alumina polymer or by the use of synthetic retention aids such as polyacrylamide-based material available from Hercules Incorporated under its Reten® trade mark.

The wax-based sizing agents can be used alone or in combination with rosin-based sizing compounds such as described above. When wax-based sizing compounds are used in conjunction with rosin size and a soluble aluminum salt, the rosin size can react with the aluminum compound in a similar fashion as when used alone to form an alumina-resinate, which in turn can act as a wax-based size retention aid.

Preferably, such wax-based sizing agents are used in amounts ranging from about 0.5 to about 5% by weight, based on the dry weight of vermiculite in the mass.

For ketene dimer-based sizing in accordance with this invention, aliphatic ketene dimers include aliphatic ketene dimers having the general formula,

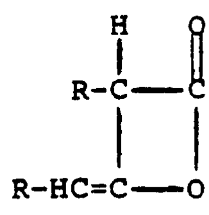

where at least one R in the formula represents a hydrophobic group containing more than 5 carbon atoms which may be selected from the group consisting of alkyl, alkenyl, aralkyl, or aralkenyl groups and the other R is hydrogen or an aliphatic hydrocarbon group.

Specific examples of useful aliphatic ketene dimers are, for example, octyl, decyl, dodecyl, tetradecyl, hexadecyl, octadecyl, eicosyl, decosyl, and tetracosyl ketene dimers; ketene dimers prepared from palmitoleic acid, oleic acid, linoleic acid; and ketene dimers prepared from naturally occurring mixtures of fatty acids such as the conventional mixtures in coconut oil, palm oil and the like.

For sizing with alkenyl succinic anhydrides in accordance with this invention, alkenyl succinic anhydrides have the general formula,

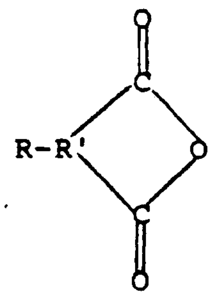

where R is a hydrophobic group containing more than 5 carbon atoms which may be selected from the group consisting of alkyl, alkenyl, aralkyl or aralkenyl groups and R′ represents a dimethylene or trimethylene radical.

Specific examples of useful alkenyl succinic anhydrides include isooctadecenyl succinic acid anhydride, n-hexadecenyl succinic acid anhydride, dodecenyl succinic acid anhydride, decenyl succinic acid anhydride, and ectenyl succinic acid anhydride. (Such anhydrides are well known, for instance, from U.S. Patent 3,821,069).

In using the ketene dimer or succinic anhydride sizing agents described above, which are both reactive hydrophobic compounds, the vermiculite lamellae can absorb or adsorb the ketene dimer or succinic anhydride, which form a low-energy hydrophobic coating on either the entire surface of each particle of vermiculite lamellae or one or more spots of each said particle. In addition, each of the aforesaid types of reactive hydrophobic compounds can react with the vermiculite particle mineral surface, which typically contains a plurality of hydroxyl groups, to form covalent ester bonds, leaving their hydrophobic tails oriented outward from the vermiculite mineral surface to present a low energy hydrophobic surface to an impinging aqueous-based penetrant, thus exhibiting a high contact angle between the hydrophobically modified vermiculite surface and any impinging water-based liquid.

Since the ketene dimer and succinic anhydride compounds are nonionic hydrophobic chemicals having little tendency to disperse in water on their own accord they can be emulsified by the use of conventional dispersing agents and stabilizers, such as cationically modified starch available as Starlock 400 from A. E. Staley Manufacturing Company and as Apollo 600 available from Penick & Ford, Ltd., or sodium lignin sulfonates, or the reaction products of epichlorohydrin and an amino-polyamide such as Kymene® 557, available from Hercules Incorporated. Such emulsions of reactive hydrophobic compounds are then added to dispersions of vermiculite lamellae in accordance with this invention.

Preferably the ketene dimers and succinic anhydrides are used in amounts ranging from about 0.5 to about 5% by weight, based on the dry weight of vermiculite in the dispersion.

Using one or more of the aforementioned internal sizing agents in accordance with this invention, the resulting masses of vermiculite lamellae, after removal of water as required, can constitute any vermiculite article known from the prior art; for example, paper and paper products, film, coatings and non-sheet solids, all resistant to aqueous-based liquid absorption and penetration and useful, for instance, as electrical and thermal insulating materials, materials for gasket fabrication, reactor facing materials, or fireproof packaging materials.

The following examples more fully illustrate embodiments of this invention in which a mass of vermiculite lamellae contains an internal sizing agent to provide a shaped article that resists aqueous-based liquids absorption and penetration.

## EXAMPLES I - VI

The following examples illustrate a preferred embodiment of this invention wherein various sizing agents useful in this invention are added to a composite slurry comprising 0.2 wt. % vermiculite lamellae of a size less than about 50 microns (based on dry vermiculite) and 0.03 wt. % Manville F110 glass fibers. After addition of said sizing agents in the indicated amounts, 1 wt. % Kymene® 2064 is added to the resulting respective slurries followed by 0.5 wt. % Reten® 523P (the percentage based on the dry weight of vermiculite), both commercially available flocculants available from Hercules Incorporated. Finished sheets are then fabricated from said slurries using a Noble and Wood handsheet machine followed by curing for 72 hours before testing. Respective sheets are then tested for contact angle formation using a Rame' Hart

Incorporation NRL CA Goniometer Model #100-05 15, and for resistance to acid ink penetration using the Hercules Size Tester (HST) method that is described in Tappi Provisional Method T530 pm-75 (1975). The results are summarized below in Table I.

TABLE I

| Example No. | Internal Sizing Agent | Weight Percent*** | Average Contact Angle | Average HST |
|---|---|---|---|---|
| | | | (degrees) | (seconds) |
| I | NONE | NONE | 55.7 | 0.57 |
| II* | Aliphatic Ketene Dimer | 1 | 134.5 | 2075.4 |
| III | Paracol Wax 404G | 2 | 120.8 | 10.1 |
| IV** | Alkenyl Succinic Anhydride | 2 | 127.2 | 3.8 |
| V | Pexol 550 | 2 | 120.7 | 3.4 |
| VI | Pexol 550 (+ Alum %) | 2 | 127.5 | 3.1 |

*Aquapel® 360XC available from Hercules Incorporated.
**Hy Size® C available from Humphrey Chemical Co.
***Weight percent sizing agent based on dry vermiculite.

EXAMPLE VII

This example further illustrates an aspect of this invention wherein water repellency and decreased aqueous- based liquid penetration and absorption by finished vermiculite sheets.

A 0.2 wt. % (dry vermiculite) dispersion of vermiculite lamellae of a size less than about 50 microns was slurried in the absence and presence of various wt. % emulsions of aliphatic ketene dimer, specifically Aquapel® 360XC available from Hercules Incorporated. Finished vermiculite sheets are then fabricated from the respective slurries using the Hercules Handsheet Operating Procedure Her 22305 5/74 method, followed by curing for 100 hours before testing. The respective sheets are then tested for contact angle formation and for resistance to ink penetration, and the results summarized in the following figure.

Contact angle relationship to sizing response in alkyl-ketene dimer sized vermiculite sheets.

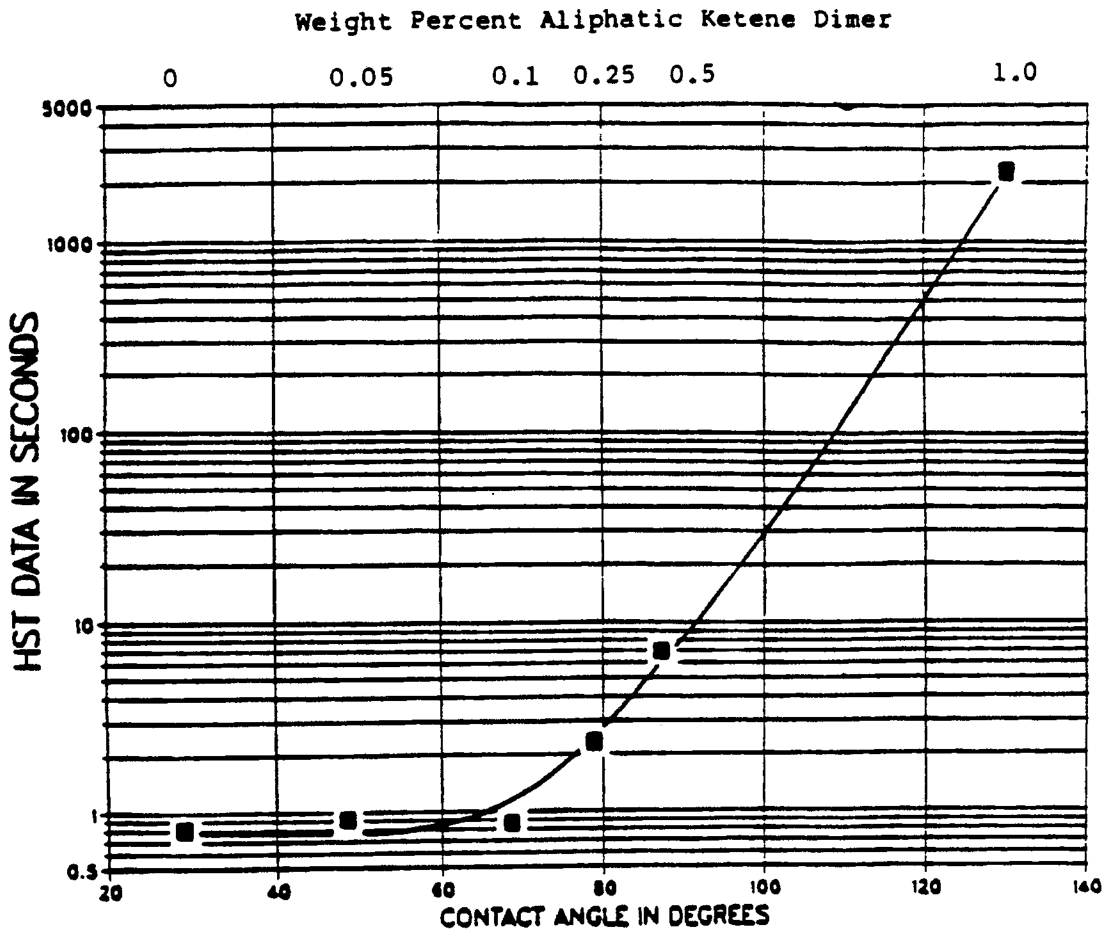


## Claims

1. A mass of vermiculite lamellae, characterized in that it has incorporated therein from about 0.2 to about 10% by weight of at least one internal sizing agent based on the dry weight of the vermiculite.

2. A mass of vermiculite lamellae as claimed in claim 1, further characterized in that the internal sizing agent is incorporated in an amount of from about 0.5 to about 5% by weight based on the dry weight of the vermiculite in the mass.

3. A mass of vermiculite lamellae, as claimed in claim 1 or 2, further characterized in that the internal sizing agent is a rosin-based size emulsion or dispersion, a paraffin or microcrystalline wax emulsion, an aliphatic ketene dimer, or an alkenyl succinic anhydride.

4. A mass of vermiculite lamellae, as claimed in claim 1, 2, or 3, further characterized in that it comprises about 0.1 to about 50% by weight of vermiculite lamellae dispersed in water.

5. A mass of vermiculite lamellae, as claimed in claim 1, 2, or 3, further characterized in that it comprises a shaped article substantially lacking in water.

6. A mass of vermiculite lamellae, as claimed in claim 5, further characterized in that the shaped article is a sheet of vermiculite paper.

7. A process for making a mass of vermiculite lamellae, in which from about 0.1 to about 50% by weight of vermiculite lamellae is dispersed in water and the water is removed from the dispersion after a shaping step to form a shaped article, characterized in that from about 0.2 to about 10% of the dry weight of the vermiculite of an internal sizing agent is incorporated into the dispersion of vermiculite lamellae before the water is removed, the internal sizing agent being capable of developing a contact angle that is greater than about 80° between the surface of the shaped article and an impinging aqueous-based liquid.

8. A process for making a mass of vermiculite lamellae as claimed in claim 7, further characterized in that from about 0.5 to about 5% of the internal sizing agent is incorporated into the dispersion.

9. A process for making a mass of vermiculite lamellae as claimed in claim 7 or 8, further characterized

in that the internal sizing agent is a rosin-based size emulsion or dispersion, a paraffin or microcrystalline wax emulsion, an aliphatic ketene dimer, or an alkenyl succinic anhydride.